# EUROPEAN PATENT SPECIFICATION

(11) **EP 4 431 778 B1**
(45) Date of publication and mention of the grant of the patent: **28.01.2026**
(21) Application number: 23162648.2
(22) Date of filing: 17.03.2023
(51) Int. Cl.: F16L 19/025, B64D 37/30

(54) **PIPE ASSEMBLY AND VEHICLE**
ROHRANORDNUNG UND FAHRZEUG
ENSEMBLE TUYAU ET VÉHICULE

(43) Date of publication of application: 18.09.2024
(73) Proprietor: Airbus Operations GmbH, 21129 Hamburg (DE)
(72) Inventor: Rohardt, Hannes, 21129 Hamburg (DE)
(74) Representative: Isarpatent

(56) References cited:
- EP-A1- 0 231 076
- EP-A1- 4 056 882
- ES-B1- 2 352 404
- US-B2- 10 627 026

## Description

### TECHNICAL FIELD OF THE INVENTION

The present invention is directed to a pipe assembly and a vehicle.

### TECHNICAL BACKGROUND

Pipes of various kinds are used to transport all sorts of materials in liquid or gaseous form. At connection points between separate pipes, a tight sealing has to be provided in order to prevent leakage of the transported material. In order to provide a sufficiently tight sealing, various methods of connecting pipes are used, for example union nuts and clamping nuts.

Recently, hydrogen has become a desired fuel for various vehicles, in particular for aircrafts. Due to the molecular properties of hydrogen, the sealing of hydrogen supply systems has to be especially tight, which exacerbates the various challenges of designing such a system.

For instance, in order to provide union nuts, which are in themselves comparatively small and light-weight, with the torque necessary to create the appropriate sealing force, special equipment has to be used which often requires comparatively much space, which can make mounting union nuts in the confined spaces of an aircraft challenging. On the other hand, clamping nuts, which require less specialized mounting equipment, as they distribute the necessary load over a plurality of bolts, are in themselves comparatively large and heavy-weight, both of which are characteristics which are not desired in aircraft construction.

EP 0 231 076 A1 describes a pipe union which comprises one or more fitting members and a sealing member which receives a ridge formed on each fitting member in a sealing fashion. One or more external sleeves hold the fitting member and the sealing member in sealing engagement.

US 10 627 026 B2 describes fittings that generally include a unitary body having an outer surface and an inner lumen forming a void within said unitary body. The lumen is configured to receive threads for mating with the threads of a female sub end of a pipe or tube.

ES 2 352 404 B1 describes a system for mounting nuts on smooth shafts, using a nut comprising an axial portion having a smooth inner surface and the same diameter as that of the shaft on which it is to be mounted, and an axial portion having a threaded inner surface and a greater diameter than that of the shaft.

EP 4 056 882 A1 describes a multi-seal coupling for fluidly interconnecting a first component and a second component within a hydrogen fuel supply system of a gas turbine engine which includes a female joint portion and a male joint portion. A first seal, a second seal and a third seal, all of which are hydrogen fuel seals, are formed between the male joint portion and the female joint portion.

### SUMMARY OF THE INVENTION

In view of the above, it is an objective of the present invention to provide a tight sealing for pipe assemblies with as low weight and small dimensions as possible.

This objective is achieved with a pipe assembly with the features of patent claim 1, and a vehicle with the features of patent claim 10.

According to a first aspect of the present invention, a pipe assembly comprising a first pipe comprising a first flange portion comprising an exterior thread, a second pipe comprising a second flange portion, which abuts against the first flange portion of the first pipe to create a sealing area, a union nut with an annular body portion comprising an interior thread, and a collar portion projecting toward an axis of the annular body portion and comprising a plurality of threaded holes, wherein the union nut is arranged such that the interior thread of the union nut interlocks with the exterior thread of the first pipe and that the collar portion of the union nut abuts the second flange portion of the second pipe, and a plurality of screws, wherein each of the plurality of screws is screwed through one of the plurality of threaded holes of the union nut such that each of the plurality of screws applies force directly to the second flange portion of the second pipe, is provided.

According to a second aspect of the present invention, a vehicle, in particular an aircraft, comprising a pipe assembly according to the invention, is provided.

One of the ideas of the present invention is to provide a union nut with an additional clamping function, i.e. to use the union nut as a leverage point for additional screws to apply additional force to a flange portion of a pipe, thereby further tightening the sealing created by the abutting flange portions of the assembled pipes. In this way, the advantages of a union nut design, e.g. the compactness of the design, with the advantages of a clamping nut design, e.g. the additive combination of multiple actors, each of which only provides a comparatively small force.

According to a preferred embodiment of the pipe assembly, the plurality of threaded holes are arranged axially symmetric on the collar portion. In this way, the screws can apply their respective forces in an advantageous even manner.

According to a further embodiment of the pipe assembly, the annular body portion comprises a plurality of notches arranged around an outer circumference of the annular body portion. These notches can provide advantageous points of leverage when mounting the union nut.

According to a preferred embodiment of the pipe assembly, at least one of the first pipe and the second pipe are configured as thin-walled pipes. This is made possible by the fact that there are no torsional forces applied to the pipes, contrary to regular union nuts. In this way, the pipes have an advantageously small weight.

According to a further embodiment of the pipe assembly, at least one of the first pipe and the second pipe comprises wall thickness of less than 1mm. In this way, the pipes have an advantageously small weight.

According to a further embodiment of the pipe, at least one of the first pipe and the second pipe comprises stainless steel, aluminum, or metal-coated carbon. These materials have advantageous characteristics for various use cases, in particular for pipes conducting hydrogen.

According to a further embodiment of the pipe assembly, the union nut comprises aluminum, titanium or a fiber-reinforced composite. These materials have advantageous characteristics, in particular concerning their weight.

According to a further embodiment of the pipe assembly, the plurality of screws comprises button head screws, socket head screws, or headless screws. These screw types have advantageous characteristics for various use cases.

According to a further embodiment, the pipe assembly further comprises a sealing washer arranged between the first flange portion of the first pipe and the second flange portion of the second pipe. The sealing washer advantageously further reinforces the sealing area.

According to a preferred embodiment of the vehicle, the pipe assembly is part of a supply system. This is a particularly preferred use case, in particular in aircrafts.

According to a further embodiment of the vehicle, the supply system is a hydrogen supply system. This is a particularly preferred use case, in particular in aircrafts.

### BRIEF SUMMARY OF THE DRAWINGS

The present invention is explained in more detail below with reference to the embodiments shown in the schematic figures:
- Fig. 1a: a schematic side-cut view of a union nut used in an embodiment of the present invention;
- Fig. 1b: a schematic front view of the union nut shown in Fig. 1a;
- Fig. 2: a schematic side-cut view of a pipe assembly according to an embodiment of the present invention; and
- Fig. 3: a schematic illustration of an aircraft according to an embodiment of the present invention.

In the figures of the drawing, elements, features and components which are identical, functionally identical and of identical action are denoted in each case by the same reference designations unless stated otherwise.

### DESCRIPTION OF EXEMPLARY EMBODIMENTS

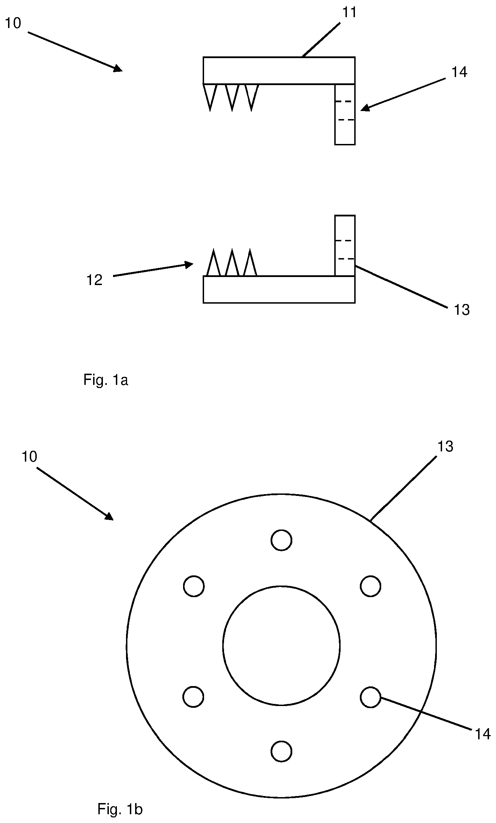

Fig. 1a and 1b show a schematic side-cut view and a schematic front view of a union nut 10 to be used in an embodiment of the present invention.

The union nut 10 comprises an annular body portion 11 comprising an interior thread 12, and a collar portion 13 projecting toward an axis of the annular body portion 11 and comprising a plurality of threaded holes 14. The threads of the threaded holes 14 are not shown for reasons of clarity

In the embodiment shown in Fig. 1 , the union nut comprises six threaded holes 14 which are arranged axially symmetric on the collar portion 13. Other numbers and arrangements of threaded holes 14 are also possible.

In the embodiment shown in Fig. 1, the annular body portion 11 is entirely circular. This embodiment has the advantage of not having any sharp edges which might pose a risk of damaging adjacent parts. Alternatively, the annular body portion 11 may comprise a plurality of notches arranged around an outer circumference of the annular body portion 11, which can provide points of leverage when mounting the union nut 10 to a pipe.

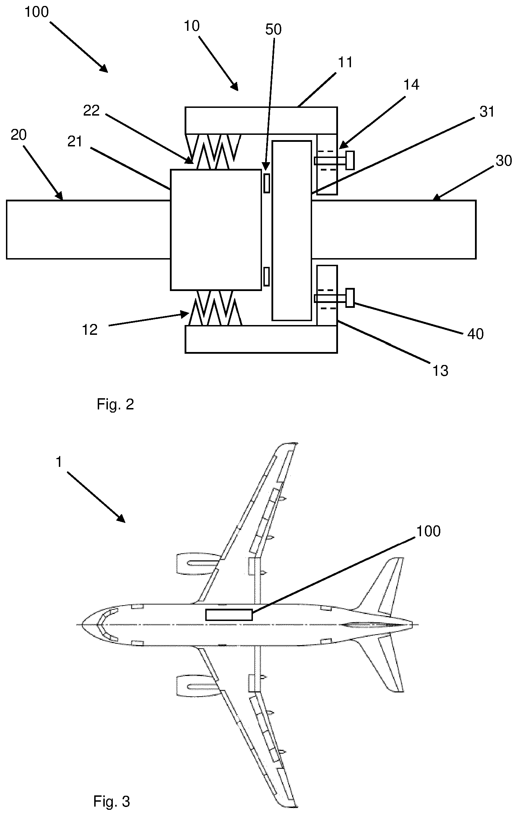

The utility of the union nut 10 will be explained in more detail with reference to Fig. 2.

Fig. 2 shows a schematic side-cut view of a pipe 100 assembly according to an embodiment of the present invention.

The pipe assembly 100 comprises a first pipe 20 comprising a first flange portion 21 comprising an exterior thread 22, a second pipe 30 comprising a second flange portion 31, a union nut 10, , a plurality of screws 40, and a sealing washer 50. The union nut 10 is configured in the same way as the embodiment shown in Fig. 1.

In Fig. 2, the various components of the pipe assembly 100 are shown separate and spaced apart from one another. This is done purely for legibility reasons. For a real pipe assembly 100, the various components will be in direct contact with one another.

The second flange portion 31 of the second pipe 30 abuts against the first flange portion 21 of the first pipe 20 to create a sealing area. The union nut 10 is arranged such that the interior thread 12 of the union nut 10 interlocks with the exterior thread 22 of the first flange portion 21 of the first pipe 20 and that the collar portion 13 of the union nut 10 abuts the second flange portion 31 of the second pipe 30. In this way, the union nut 10 presses the second flange portion 31 against the first flange portion 21, reinforcing the sealing area.

Each of the plurality of screws 40 is screwed through one of the plurality of threaded holes 14 of the union nut 10 such that each of the plurality of screws 40 applies force directly to the second flange portion 31 of the second pipe 30. Through the application of this force, the plurality of screws 40 further reinforce the sealing area above what is provided by the union nut 10 on its own.

Fig.2, being a schematic drawing, gives no information as to the exact proportions and design of the various components. At least one of the first pipe 20 and the second pipe 30 can configured as thin-walled pipes, in particular with a wall thickness of less than 1mm. Creating tight seals with these kinds of pipes can be challenging, as the various forces acting on the pipes, especially at the sealing area, have to be compensated, which the pipe assembly 100 shown in Fig. 2 accomplishes in a particular advantageous manner.

At least one of the first pipe 20 and the second pipe 30 may comprise stainless steel, aluminum, or metal-coated carbon and the union nut 10 may comprise aluminum, titanium, or a fiber-reinforced composite. These materials can be of particular advantage in various use cases due to their particular characteristics. The plurality of screws 40 comprises button head screws, socket head screws, or headless screws, which can be advantageous depending on the details of the particular embodiment. The type of threading used and the size of the screws can be adapted to the peculiarities of the specific embodiment.

The sealing washer 50, which is purely optional, is arranged between the first flange portion 21 of the first pipe 20 and the second flange portion 31 of the second pipe 30 and further reinforces the sealing area created by the first flange portion and the second flange portion. Additionally to or instead of the sealing washer 50, any type of component, which is capable of reinforcing the sealing area can be used.

Fig. 3 shows a schematic illustration of an aircraft 1 according to an embodiment of the present invention.

The aircraft 1 comprises a pipe assembly 100. This pipe assembly 100, which is not shown in detail in Fig. 3, can be configured in the way shown in Fig. 2. In general, an aircraft 1 will comprise multiple pipe assemblies 100, which form parts of a supply system, in particular a hydrogen supply system.

### LIST OF REFERENCE SIGNS

- 1: vehicle; aircraft
- 10: union nut
- 11: annular body portion
- 12: interior thread
- 13: collar portion
- 14: threaded hole
- 20: first pipe
- 21: first flange portion
- 22: exterior thread
- 30: second pipe
- 31: second flange portion
- 40: screw
- 50: sealing washer
- 100: pipe assembly

## Claims

1. Pipe assembly (100) comprising
a first pipe (20) comprising a first flange portion (21) comprising an exterior thread (22);
a second pipe (30) comprising a second flange portion (31), which abuts against the first flange portion (21) of the first pipe (20) to create a sealing area ;
a union nut (10) with an annular body portion (11) comprising an interior thread (12); and a collar portion (13) projecting toward an axis of the annular body portion (11) and comprising a plurality of threaded holes (14), wherein the union nut (10) is arranged such that the interior thread (12) of the union nut (10) interlocks with the exterior thread (22) of the first pipe (20) and that the collar portion (13) of the union nut (10) abuts the second flange portion (31) of the second pipe (30); and
a plurality of screws (40),
**characterised in that** each of the plurality of screws (40) is screwed through one of the plurality of threaded holes (14) of the union nut (10) such that each of the plurality of screws (40) applies force directly to the second flange portion (31) of the second pipe (30).

2. Pipe assembly (100) according to claim 1, wherein at least one of the first pipe (20) and the second pipe (30) are configured as thin-walled pipes.

3. Pipe assembly (100) according to claim 2, wherein at least one of the first pipe (20) and the second pipe (30) comprises wall thickness of less than 1mm.

4. Pipe assembly (100) according to any one of claims 1 to 3, wherein at least one of the first pipe (20) and the second pipe (30) comprises stainless steel, aluminum, or metal-coated carbon.

5. Pipe assembly (100) according to any one of claims 1 to 4, wherein the union nut (10) comprises aluminum, titanium, or a fiber-reinforced composite.

6. Pipe assembly (100) according to any one of claims 1 to 5, wherein the plurality of screws (40) comprises button head screws, socket head screws, or headless screws.

7. Pipe assembly (100) according to any one of claims 1 to 6, further comprising a sealing washer (50) arranged between the first flange portion (21) of the first pipe (20) and the second flange portion (31) of the second pipe (30).

8. Pipe assembly (100) according to any one of claims 1 to 7, wherein the plurality of threaded holes (14) are arranged axially symmetric on the collar portion (13).

9. Pipe assembly (100) according to any one of claims 1 to 8, wherein the annular body portion (11) comprises a plurality of notches arranged around an outer circumference of the annular body portion (11).

10. Vehicle (1), in particular aircraft, comprising a pipe assembly (100) according to any one of claims 1 to 9.

11. Vehicle (1) according to claim 10, wherein the pipe assembly (100) is part of a supply system.

12. Vehicle (1) according to claim 11, wherein the supply system is a hydrogen supply system.

## Patentansprüche

1. Rohranordnung (100), umfassend
ein erstes Rohr (20) mit einem ersten Flanschabschnitt (21), der ein Außengewinde (22) umfasst;
ein zweites Rohr (30) mit einem zweiten Flanschabschnitt (31), der an dem ersten Flanschabschnitt (21) des ersten Rohrs (20) anliegt, um einen Dichtungsbereich zu bilden;
eine Überwurfmutter (10) mit einem ringförmigen Körperabschnitt (11), der ein Innengewinde (12) umfasst;
und einem Kragenabschnitt (13), der in Richtung einer Achse des ringförmigen Körperabschnitts (11) vorsteht und eine Vielzahl von Gewindebohrungen (14) umfasst, wobei die Überwurfmutter (10) so angeordnet ist, dass das Innengewinde (12) der Überwurfmutter (10) mit dem Außengewinde (22) des ersten Rohrs (20) in Eingriff steht und dass der Kragenabschnitt (13) der Überwurfmutter (10) an dem zweiten Flanschabschnitt (31) des zweiten Rohrs (30) anliegt; und
eine Vielzahl von Schrauben (40),
**dadurch gekennzeichnet, dass** jede der Vielzahl von Schrauben (40) so durch eine der Vielzahl von Gewindebohrungen (14) der Überwurfmutter (10) geschraubt ist, dass jede der Vielzahl von Schrauben (40) eine Kraft direkt auf den zweiten Flanschabschnitt (31) des zweiten Rohrs (30) ausübt.

2. Rohranordnung (100) nach Anspruch 1, wobei das erste Rohr (20) und/oder das zweite Rohr (30) als dünnwandige Rohre ausgestaltet sind.

3. Rohranordnung (100) nach Anspruch 2, wobei das erste Rohr (20) und/oder das zweite Rohr (30) eine Wandstärke von weniger als 1 mm umfasst.

4. Rohranordnung (100) nach einem der Ansprüche 1 bis 3, wobei das erste Rohr (20) und/oder das zweite Rohr (30) Edelstahl, Aluminium oder metallbeschichtete Kohlefaser umfasst.

5. Rohranordnung (100) nach einem der Ansprüche 1 bis 4, wobei die Überwurfmutter (10) Aluminium, Titan oder einen faserverstärkten Verbundwerkstoff umfasst.

6. Rohranordnung (100) nach einem der Ansprüche 1 bis 5, wobei die Vielzahl von Schrauben (40) Flachkopfschrauben, Innensechskantschrauben oder Gewindestifte umfasst.

7. Rohranordnung (100) nach einem der Ansprüche 1 bis 6, ferner umfassend eine Dichtungsscheibe (50), die zwischen dem ersten Flanschabschnitt (21) des ersten Rohrs (20) und dem zweiten Flanschabschnitt (31) des zweiten Rohrs (30) angeordnet ist.

8. Rohranordnung (100) nach einem der Ansprüche 1 bis 7, wobei die Vielzahl von Gewindebohrungen (14) achsensymmetrisch an dem Kragenabschnitt (13) angeordnet ist.

9. Rohranordnung (100) nach einem der Ansprüche 1 bis 8, wobei der ringförmige Körperabschnitt (11) eine Vielzahl von Kerben umfasst, die entlang eines Außenumfangs des ringförmigen Körperabschnitts (11) angeordnet sind.

10. Fahrzeug (1), insbesondere Luftfahrzeug, mit einer Rohranordnung (100) nach einem der Ansprüche 1 bis 9.

11. Fahrzeug (1) nach Anspruch 10, wobei die Rohranordnung (100) Teil eines Versorgungssystems ist.

12. Fahrzeug (1) nach Anspruch 11, wobei das Versorgungssystem ein Wasserstoffversorgungssystem ist.

## Revendications

1. Assemblage de conduites (100) comprenant
une première conduite (20) comportant une première partie bride (21) comportant un filetage extérieur (22) ;
une seconde conduite (30) comprenant une seconde partie bride (31), qui est en appui contre la première partie bride (21) de la première conduite (20) pour créer une zone d'étanchéité ;
un écrou-raccord (10) avec une partie corps annulaire (11) comportant un filetage intérieur (12) ; et une partie collet (13) faisant saillie vers un axe de la partie corps annulaire (11) et comprenant une pluralité de trous filetés (14), l'écrou-raccord (10) étant disposé de telle sorte que le filetage intérieur (12) de l'écrou-raccord (10) s'accouple avec le filetage extérieur (22) de la première conduite (20) et que la partie collet (13) de l'écrou-raccord (10) vienne en appui contre la seconde partie bride (31) de la seconde conduite (30) ; et
une pluralité de vis (40),
**caractérisé en ce que** chacune de la pluralité de vis (40) est vissée à travers un trou de la pluralité de trous filetés (14) de l'écrou-raccord (10), de telle sorte que chacune de la pluralité de vis (40) applique une force directement sur la seconde partie bride (31) de la seconde conduite (30).

2. Assemblage de conduites (100) selon la revendication 1, dans lequel la première conduite (20) et/ou la seconde conduite (30) sont conçues sous la forme de conduites à paroi mince.

3. Assemblage de conduites (100) selon la revendication 2, dans lequel la première conduite (20) et/ou la seconde conduite (30) présentent une épaisseur de paroi inférieure à 1 mm.

4. Assemblage de conduites (100) selon l'une quelconque des revendications 1 à 3, dans lequel la première conduite (20) et/ou la seconde conduite (30) comprennent de l'acier inoxydable, de l'aluminium ou du carbone revêtu de métal.

5. Assemblage de conduites (100) selon l'une quelconque des revendications 1 à 4, dans lequel l'écrou-raccord (10) comprend de l'aluminium, du titane, ou un composite renforcé par des fibres.

6. Assemblage de conduites (100) selon l'une quelconque des revendications 1 à 5, dans lequel la pluralité de vis (40) comprend des vis à tête ronde, des vis à tête creuse ou des vis sans tête.

7. Assemblage de conduites (100) selon l'une quelconque des revendications 1 à 6, comprenant en outre une rondelle d'étanchéité (50) disposée entre la première partie bride (21) de la première conduite (20) et la seconde partie bride (31) de la seconde conduite (30).

8. Assemblage de conduites (100) selon l'une quelconque des revendications 1 à 7, dans lequel la pluralité de trous filetés (14) sont disposés en symétrie axiale sur la partie collet (13).

9. Assemblage de conduites (100) selon l'une quelconque des revendications 1 à 8, dans lequel la partie corps annulaire (11) comprend une pluralité d'encoches agencées autour d'une circonférence extérieure de la partie corps annulaire (11).

10. Véhicule (1), notamment aéronef, comprenant un assemblage de conduites (100) selon l'une quelconque des revendications 1 à 9.

11. Véhicule (1) selon la revendication 10, dans lequel l'assemblage de conduites (100) fait partie d'un système d'alimentation.

12. Véhicule (1) selon la revendication 11, dans lequel le système d'alimentation est un système d'alimentation en hydrogène.
